# EUROPÄISCHE PATENTANMELDUNG

(11) **EP 4 641 328 A1**
(43) Veröffentlichungstag der Anmeldung: **29.10.2025**
(21) Anmeldenummer: 24172531.6
(22) Anmeldetag: 25.04.2024
(51) Int. Cl.: G05B 19/418, G06F 16/84

(54) **VERFAHREN FÜR EIN ÄNDERUNGSMANAGEMENT IN PLANUNG UND BETRIEB EINES AUTOMATISIERUNGSSYSTEMS, COMPUTERPROGRAMMPRODUKT UND VORRICHTUNG**

(71) Anmelder: Siemens Aktiengesellschaft, 80333 München (DE)
(72) Erfinder: Berenz, Michael, 56068 Koblenz (DE); Eckl, Roland, 91301 Forchheim (DE); Kluge, Georg, 76351 Linkenheim (DE); Lamparter, Steffen, 85622 Feldkirchen (DE); Li, Yan, 76185 Karlsruhe (DE); Lutz, Benjamin, 76327 Pfinztal (DE); Scharinger, Peter, 67435 Neustadt (DE)
(74) Vertreter: Siemens Patent Attorneys

(57) **Zusammenfassung**

Die Erfindung betrifft ein Änderungsmanagement in Planung und Betrieb eines Automatisierungssystems, sowie ein Computerprogrammprodukt und eine Vorrichtung.

Bisher konnten keine auf Zustimmung beruhenden Lösungen verifiziert werden. Durch einen Abstimmungsprozess wird erfindungsgemäß festgestellt, dass die Änderung mit den existierenden Daten konform ist. Des Weiteren beruht die Lösung auf zwei in Kombination neuen Ansätzen:
- die Einführung eines unabhängigen Metamodells (von Hersteller, Technologie) zum Austausch der Modelle, und
- die Einführung eines Koordinationsmechanismus zur Sicherstellung der Konsistenz für die verteilte Änderung.

## Beschreibung

Als Automatisierungstechnik wird jene Technik bezeichnet, deren Zweck darin besteht, Prozesse, Maschinen und Anlagen zu automatisieren. Das heißt: diese Prozesse, Maschinen und Anlagen werden in die Lage versetzt, ohne menschliches Eingreifen zu funktionieren und sich selbst zu steuern. Automatisierungstechnik bezieht sich auf mehrere Fachgebiete der Ingenieurswissenschaften: die Elektrotechnik, den Maschinenbau und die Informationstechnik. Im Hinblick auf Fachdisziplinen wird die Automatisierungstechnik im Bereich des Steuerns, des Regelns, des Messens, der Kommunikation, der Sicherheit, der Implementierung und der Mensch-Maschinen-Schnittstellen eingesetzt.

In der Planung und dem Betrieb von Automatisierungssystemen sind derzeit typischerweise verschiedene Softwaresysteme beteiligt, welche jeweils die unterschiedlichen Fachgebiete abdecken.

### Bekannte Beispiele hierfür sind

- Prozeßleitsysteme / Operation / Distributed Control System DCS
- Engineering Systeme
- Fertigungsmanagement System, MOM Manufacturing Operations Management
- SCADA (Supervisory Control and Data Acquisition)

Heutzutage sind sowohl die Shopfloor-, als auch die Top-Floor-Umgebungen, also von der tatsächlichen Produktionsstätte, wie der Fertigungshalle bis zur Steuerungssoftware sehr heterogen, mit vielen verschiedenen Protokollen und Standards für Offenlegen und Freigeben von Daten. Der Datenaustausch wird nicht nur durch die Vielzahl unterschiedlicher Schnittstellen erschwert, sondern auch durch die Vielfalt der Informationsmodelle und die semantische Reife der Daten, die diesen Schnittstellen zugrunde liegen: von unstrukturierten Rohdaten ohne Kontext zu Daten, bis hin zu verschiedenen Standards oder proprietären Datenmodellen, die nach einer expliziten Ontologie strukturiert und angereichert wurden. Komplexität, Umfang und Nutzungskontext variieren in vielerlei Hinsicht und machen eine einheitliche Verarbeitung der Daten über die verschiedenen Fachgebiete und Werkzeuge unmöglich.

In jedem System werden Daten (über Entitäten und deren Aspekte/Attribute) generiert und über Schnittstellen dann weiteren Systemen zur Verfügung gestellt. Beispiele hierzu sind:
- Beschreibungen der Assets/Maschinen,
- Angaben über deren Eigenschaften und Messwerte, sowie
- die Beziehung zwischen den verschiedenen Assets/Maschinen.

Beim Austausch der Daten kommt es typischerweise zu Inkonsistenzen zwischen den Daten in den einzelnen Systemen, da diese unabhängig voneinander beispielsweise von verschiedenen Personen gepflegt werden, von verschiedenen Herstellern zur Verfügung gestellt werden, oder auf Basis verschiedener Standards erzeugt werden.

Unter einem Asset versteht man im Folgenden alle Teile einer Automatisierungsanlagen, wie die Anlage oder Teile davon, darin eingesetzte Werkzeuge und alles, was nötig und erforderlich ist, die Anlage bestimmungsgemäß zu gebrauchen.

Es gibt viele Beispiele, bei denen etwa ein Distributed Control System (DCS) oder Supervisory Control and Data Acquisition (SCADA) System mit einem Manufacturing Operations Management (MOM)-System integriert werden sollen, oder der Kunde möchte die Daten aus mehreren Shopfloor-Quellen integrieren, um den Prozess zu optimieren. Jedoch kann bisher für solche Anforderungen keine etablierte Lösung bereitgestellt werden.

Es gibt eigene Werkzeuge, um benutzerdefinierte Lösungen für die oben beschriebenen Herausforderungen zu erstellen, die solche Integrationsprobleme lösen. Diese Lösungen sind teuer, zeitaufwendig und in der Regel nicht reproduzierbar, da sie jeweils individuelle, sehr kundenspezifische Integrationsprobleme adressieren. Das macht den Einsatz für kleinere Kunden unattraktiv.

Bekannte Ansätze zur Bewältigung der Integrationsaufgabe sind beispielsweise:
- Belassen der Datenquelle (also des jeweiligen Software-Werkzeugs) "wie sie ist" und Integrieren der erzeugten und verwendeten Daten mit den Schritten Extrahieren - Transformieren - Laden in einem separaten Bearbeitungsschritt.
- Alternativ kann anhand von Standardisierung die Art und Weise, wie die Software-Werkzeuge Daten strukturieren, benennen und verfügbar machen, vereinheitlicht und ein Austausch zwischen den Werkzeugen möglich gemacht werden. Dies geschieht in der Regel auf Domänenbasis, also pro Domaintyp gibt es jeweils einen eigenen Standard, z. B. ein Asset Model basierend auf einer Hierarchie gemäß dem Standard ANSI/ISA-88, oder Aufträge und Material basierend auf dem Standard ANSI/ISA-95.

Derzeit werden solche Änderungen durch ein Software-Werkzeug nur lokal innerhalb des eigenen Systems auf Konsistenz geprüft. Daraus resultierende systemübergreifende unbeabsichtigte Inkonsistenzen können damit nicht erkannt werden. Infolge dieser Inkonsistenzen können weitere Folge-Probleme entstehen wie beispielsweise der Ausfall von Maschinen durch fehlerhafte oder fehlende Wartung oder Produktqualitätsprobleme durch falsche Bedienung bzw. Maschinen-Parametrisierung.

Bereits bekannt sind Simulationssysteme, mit denen gewünschte Änderungen in den Daten anlagen- und Software-Werkzeug übergreifend vorab simuliert und so auf ggf. existierende Inkonsistenzen geprüft werden können. Diese Simulationslösungen sind allerdings sehr pflegeaufwändig, jede Änderung in der realen Anlage muss in der Simulation zeitnah nachgezogen werden, um verwertbare Aussagen zu erhalten. Weiterhin kann durch die Simulation nur eine Plausibilitätsprüfung von bereits geplanten Änderungen durchgeführt werden.

Es ist aber nicht möglich, eine Änderung über eine Ablaufkette in weiteren Software-Werkzeugen einzuführen. Weiterhin gibt es bei festgestellten Problemen keine Rückmeldung was genau, wo und insbesondere warum nicht funktioniert hat. Man ist also am Ende in einer Trial-and-Error Situation.

Ein erster Schritt zur Vereinfachung des Datenaustauschs zwischen den einzelnen Systemen ist die Einführung eines gemeinsamen Datenaustauschformats für Entitäten & Aspekte sowie deren Kontext. Ein mögliches gemeinsame Datenaustauschformat ist beispielsweise beschrieben in der eigenen Patent-Anmeldung "Vorrichtung zum Datenaustausch in einer Anlage, sowie computerimplementiertes Verfahren" unter dem Aktenzeichen PCT/EP2023/063005. Über dieses Modell können Daten referenziert und dezentral (unabhängig voneinander) abgelegt und geändert werden.

Folgende Änderungsanforderungen können auftreten:
- Wert
- Struktur
- Verknüpfungen
- Semantik im Allgemeinen

Die Aufgabe der Erfindung ist es, ein Verfahren für ein Änderungsmanagement in Planung und Betrieb eines Automatisierungssystems anzugeben, zur Sicherstellung von konsistenten Daten unter Verwendung eines gemeinsames Datenaustauschformats. Ausserdem ist es Aufgabe der Erfindung, eine Möglichkeit zur Synchronisierung dezentraler Änderungen anzubieten.

Diese Aufgabe wird gelöst durch ein Verfahren gemäß dem Patentanspruch 1 und ein Computerprogrammprodukt gemäß Patentanspruch 8.

Die Aufgabe wird weiterhin gelöst durch eine Vorrichtung gemäß Patentanspruch 9.

Weitere Ausführungsformen der Erfindung sind in den Unteransprüchen beschrieben.

Das erfindungsgemäße Verfahren betrifft das Änderungsmanagement in Planung und Betrieb eines Automatisierungssystems einer Industriellen Anlage mit Assets, und mit zumindest einem ersten Software-Werkzeug zur Durchführung einer Planung der Anlage oder Teilen der Anlage oder der Steuerung des Betriebs in der Industriellen Anlage und zumindest ein zweites, vom ersten verschiedenes Software-Werkzeug zur Durchführung einer Planung der Industriellen Anlage oder Teilen davon oder zur Durchführung der Steuerung der Industriellen Anlage während des Betriebs.

Jedes Software-Werkzeug weist ein werkzeug-eigenes Daten-Modell für die in dem Software-Werkzeug generierten und verwendeten Informationen, beispielsweise Messwertbereichen (von Sensoren, Motoren, ...) auf, und jedes Software-Werkzeug weist eine werkzeug-eigene Schnittstelle auf.

Weiterhin wird ein weiteren, einheitliches Datenaustauschformat verwendet, welches eine eindeutige Identifikation des Assets in allen Software-Werkzeugen ermöglicht.

Das Verfahren umfasst folgende Schritte:
a. Durchführung einer Änderung an den Daten der industriellen Anlage in dem ersten Software-Werkzeug, und lokale Prüfung der Änderung in dem Software-Werkzeug auf Konsistenz,
b. Erzeugen eines Änderungs-Datensatzes in dem Datenaustauschformat, und Übermitteln an das zweiten Software-Werkzeug
c. Überprüfung des angefragten Änderungs-Datensatzes bei dem zweiten Software-Werkzeug auf Konsistenz
d. Rückmeldung an das erste Software-Werkzeug, ob die Änderung in dem zweiten Software-Werkzeug möglich ist,
e. Nur wenn alle angefragten Software-Werkzeuge eine positive Rückmeldung abgegeben haben:
f. Übernahme der Änderungen in allen Software-Werkzeugen
g. Ausführung der geänderten Software-Werkzeuge in dem Automatisierungssystems der Industriellen Anlage.

Durch das beschriebene computerimplementierte Verfahren lässt sich der Austausch und Abgleich von Projektierungsdaten zwischen den unterschiedlichen Software-Komponenten gliedern.

Im Folgenden wird die Erfindung durch Figuren dargestellt, dabei zeigt
- Figur 1: eine beispielhafte Konfiguration eines inhaltsbasierten technischen Engineering-Ar-beitsablaufs,
- Figur 2: ein generisches Ausführungsbeispiel für drei beteiligte Systeme in Form eines Daten-flußplans
- Figur 3: einen Entwicklungskreislauf in einer Anlage von Engineering - Betrieb - Design und Simulation
- Figur 4: eine schematische Übersicht über die Vorrichtung.

Voraussetzungen und Randbedingungen für die beschriebene Lösung:
Bei den Software-Werkzeugen sind die bereits bekannten, oben bereits aufgezählten Werkzeuge umfasst. Ziel der Erfindung ist es, die in den werkzeug-eigenes Daten-Modellen vorliegenden Informationen zur Anlage so zu verwaltenden Assets durch die jeweiligen Software-Werkzeuge.

Die grundlegende Idee der Erfindung basiert darauf, dass alle beteiligten Software-Werkzeuge dieselbe Semantik verwenden und auf einem geteilten Kontext arbeiten, basierend auf einem gemeinsamen Meta-Modell. Die Software-Werkzeuge müssen gegenseitig bekannt sein. Die Software-Werkzeuge kommunizieren über und arbeiten auf dem gemeinsamen Meta-Model mit einer festgelegten Semantik und tauschen sich über bestimmte Informationsmodelle aus, die von gemeinsamem Interesse für zwei oder mehrere Software-Werkzeuge sind.

Über das Meta-Modell werden auch Aspekte wie die Adressierung und Identifikation von Elementen und Assets im Modell einheitlich gelöst. Dabei stehen jedoch ggf. abhängig von dem jeweiligen Software-Werkzeug unterschiedliche Aspekte im Vordergrund, so interessieren sich zwar alle drei Software-Werkzeuge für das Asset Model, aber manche Software-Werkzeuge sind nur am verfügbaren Equipment interessiert (MOM), d. h. in dem zitierten Beispiel welche Ventile verfügbar oder passend sind, während sich andere Software-Werkzeug auch über bestimmte Detail-Parameter (z. B. SOLL/IST des Ventildrucks des Ventils) austauschen. Der jeweils geteilte Kontext umfasst daher üblicherweise verschiedene Detail- bzw. Abstraktionsniveaus derselben Informationen.

Unterschieden wird dabei zwischen Laufzeitdaten, beispielsweise Aktualwerte wie ein Ventildruck, die kontinuierlich von einem Sensor gemessen/gelesen und systemseitig publiziert werden, und Modelldaten (z. B. Konfigurationswerte oder strukturelle Informationen bzgl. Zusammenhängen und Aufbau) welche gezielt im Zuge eines Engineerings oder Authorings geändert werden müssen. Jedes Software-Werkzeug legt bis zu einem gewissen Grad andere Einschränkungen (Constraints) an, was erlaubte Modelldaten sind.

Das Hinterlegen aller Constraints wäre dabei entweder zu aufwändig (das Erfassen und Modellieren dieser Constraints, aber auch das Auswerten seitens jedes einzelnen Software-Werkzeugs) oder nicht möglich (dynamische Abhängigkeiten oder Bezug zu Daten, die nur einem Einzelnen Software-Werkzeug bekannt sind).

Dennoch muss bei einem Szenario mit mehreren interagierenden Software-Werkzeugen sichergestellt sein, dass jedes Software-Werkzeug Daten ändern kann, ohne dass es zu Inkonsistenzen oder ungültigen Modelldaten in einem der anderen Software-Werkzeuge kommt. Um dies sicherzustellen, müssen sich die Software-Werkzeug insbesondere über Modelländerungen verständigen. Eine Änderung kann dabei eine singuläre Änderung oder eine Sammlung zusammengehöriger Teiländerungen darstellen. Nachfolgend wird dabei immer lediglich von Änderungen gesprochen, wobei beides damit umfasst ist.

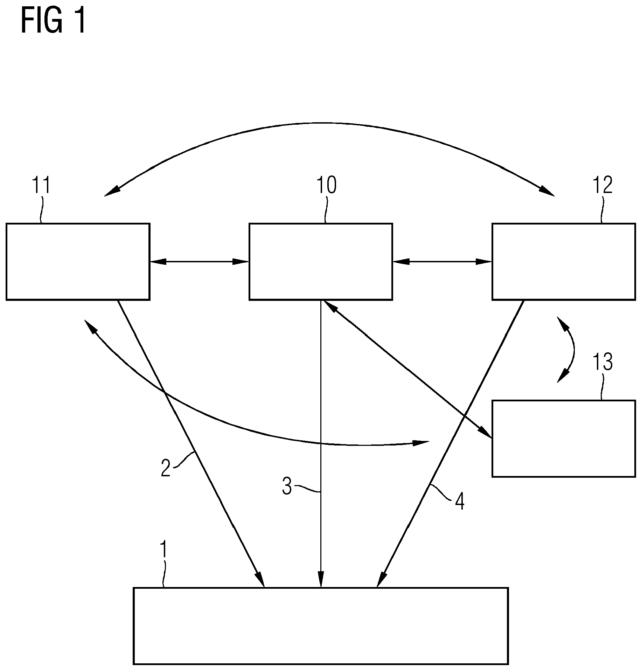

Figur 1 zeigt ein Beispiel mit drei Werkzeugen 11, 12, 13 und einem zentralen Änderungstransaktionsmanager 10. Im industriellen Umfeld sind insbesondere die Bereiche Design, Engineering und Betrieb durch Software-Werkzeuge unterstützt. Auf der linken Seite ist das Werkzeug 11 dargestellt, in welchem die initiale Änderung vorgenommen werden soll. Dabei ist es irrelevant, welcher Art das Werkzeug ist. Durch den Änderungstransaktionsmanager 10 wird nun die gewünschte Änderung bei den anderen betroffenen Software-Werkzeugen 12 und 13 angefragt und bei positiver Prüfung übernommen.

Die angefragten Software-Werkzeuge analysieren dabei die Änderungsanforderung, transferieren sie ggf. in eine eigene Semantik und überprüfen die Kompatibilität nach den jeweils geltenden eigenen Regeln.

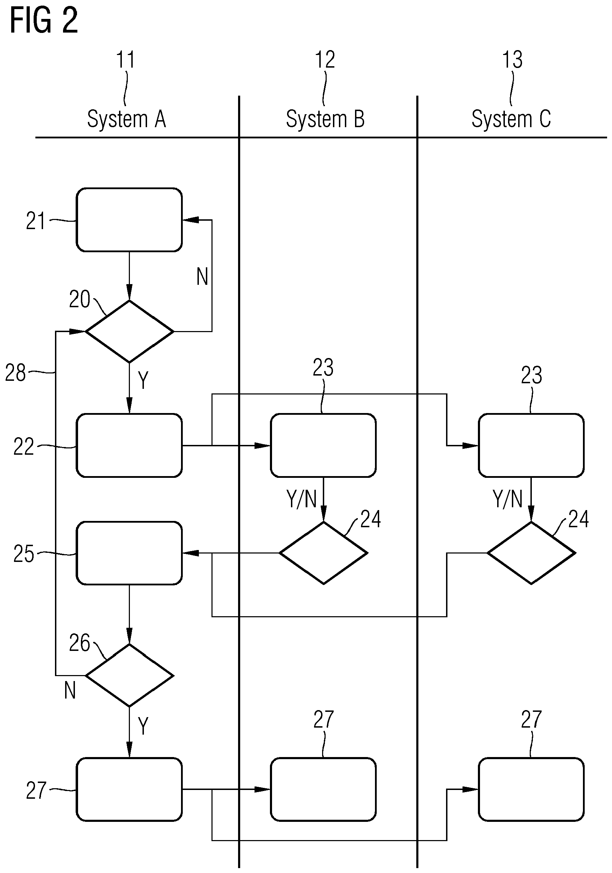

Figur 2 zeigt nun einen detaillierten Ablaufplan für ein mögliches Vorgehen. System A, 11 ist das Software-Werkzeug, das die Änderung zunächst anstößt. Bevor die Änderungen in das Gesamtsystem übertragen werden, muss natürlich geklärt sein, dass die Änderungen in dem initiierenden System so auch vollständig akzeptiert sind.

Sammeln von Teiländerungen in einem vom Produktivmodell separierten Bereich
In einer Ausgestaltung der Erfindung werden in Schritt a) zunächst mehrere Änderungen, bevor der Änderungs-Datensatz in dem Datenaustauschformat (22) erzeugt wird, wobei jede Teiländerung mit derselben Semantik erfasst wird wie das Werkzeug-eigenes Daten-Modell welches den aktuellen Zustand darstellt.

Solche Änderungen werden dabei lokal innerhalb eines Software-Werkzeugs vorgenommen, jedoch vorerst ohne, dass diese sofort Auswirkung auf den Produktivbetrieb haben. Darüber hinaus können unabhängig voneinander mehrere Bereiche für Änderungen erstellt werden. Jede Teiländerung wird mit derselben Semantik wie das Produktivmodell in einem Änderungssatz (Changeset) erfasst.

### Lokale Kompatibilitätsprüfung

Soll ein Änderungssatz nun auf den Produktivbetrieb angewandt werden, muss zuerst geprüft werden, ob der Änderungsbereich noch kompatibel zum produktiven Modell ein dem jeweiligen Software-Werkzeug ist, 21, 20. Falls dies nicht der Fall ist, müssen in der Zwischenzeit entstandene lokale Inkonsistenzen zuerst aufgelöst werden. Dies kann etwa passieren, wenn andere Änderungen, egal ob von anderen Software-Werkzeugen oder weiteren lokalen Änderungsbereichen, bereits in das produktive Modell übernommen wurden.

Voraussetzung für das weitere Verfahren ist also, dass die Änderung im eigenen System stimmig ist.

Der lokale Änderungssatz wird den anderen Software-Werkzeugen zur Disposition gestellt, 22 Nach Empfang und erfolgreicher lokaler Prüfung, 24, wird der Änderungssatz den anderen Software-Werkzeug übermittelt, 23. Jedes teilnehmende Software-Werkzeug erhält dabei den Änderungssatz und prüft ihn gegen das lokale Modell und die systemeigenen Constraints, 24.

Ein Software-Werkzeug kann den Änderungssatz auch an weitere abhängige Software-Werkzeuge weiterreichen. Dabei spielt es keine Rolle, ob das Software-Werkzeug aktiv mit dem Modell arbeitet oder als reiner Vermittler (beispielsweise ein Router, Relais oder Repeater) auftritt, etwa um Netzwerkgrenzen zu überwinden.

### Optionale Rückfragen

Sofern notwendig, können die Software-Werkzeuge beim Ersteller des Änderungssatzes auch Rückfragen stellen, um fehlende Modellinformationen zu ergänzen. Dies kann der Fall sein, wenn sich die Änderungen auf Informationen beziehen, die für das jeweilige Software-Werkzeuge bislang nicht relevant waren und somit im lokal bekannten Ausschnitt des Gesamtmodells lokal nicht verfügbar sind. Dies können beispielsweise Querbeziehungen zu anderen Objekten sein, aber auch Verweise auf Typ-Informationen, etc. In der Figur 2 ist diese Rückfrage nicht dargestellt.

### Jeweils system-lokale Kompatibilitätslösungen

Jedes Software-Werkzeug System B, System C, prüft, 24, wie oben beschrieben, ob der Änderungssatz werkzeug-lokal auf das Produktivmodell angewandt werden kann. Das Ergebnis wird dem ursprünglichen Software-Werkzeug System A, 11, zur Verfügung gestellt. Wird der Änderungssatz akzeptiert, so sollten vorerst keine Änderungen lokal geprüft und akzeptiert werden, bis der Änderungssatz final vom Ursprungssystem System A, 11, geprüft, 26, und freigegeben wird, 27. Kann die Änderung nicht akzeptiert werden, so wird der Änderungssatz abgewiesen. Diese Variante ist in der Figur 2 ebenfalls nicht dargestellt. In einer Ausführungsform können die Änderungen des Satzes markiert werden welche zur Ablehnung geführt haben. Vorzugsweise sind Korrekturvorschläge enthalten.

Dies ist hilfreich für das initiierende Software-Werkzeug, System A, 11, um zu ermitteln, woran die Ablehnung gelegen haben kann und dann ggf. in einem weiteren Versuch einen verbesserten Änderungssatz weiterzugeben, welcher dann auch akzeptiert wird.

### Finale Zustimmung oder Ablehnung

Haben alle angefragten Software-Werkzeuge 12, 13 dem Änderungssatz zugestimmt (bzw. im Fall von Weiterleitungen diese Software-Werkzeuge stellvertretend für alle dahinterliegenden Software-Werkzeuge), so wird die Modelländerung aktiv geschaltet und dies allen Teilnehmern mitgeteilt. Erst jetzt dürfen die Änderungen tatsächlich auf des jeweilige Produktivsystem angewandt werden und der Vorgang damit beendet werden.

Im Falle auch nur einer Ablehnung kann der Änderungssatz zurückgezogen werden. Die Änderung wird nicht produktiv übernommen, und der Vorgang vorerst beendet. Alternativ kann der Vorgang mit Modifikationen, beispielsweise basierend auf den Korrekturvorschlägen von oben, erneut zur Disposition gestellt werden. Der Vorgang wird bei 20 oder auch bei 21 (in der Figur nicht dargestellt) wieder fortgesetzt).

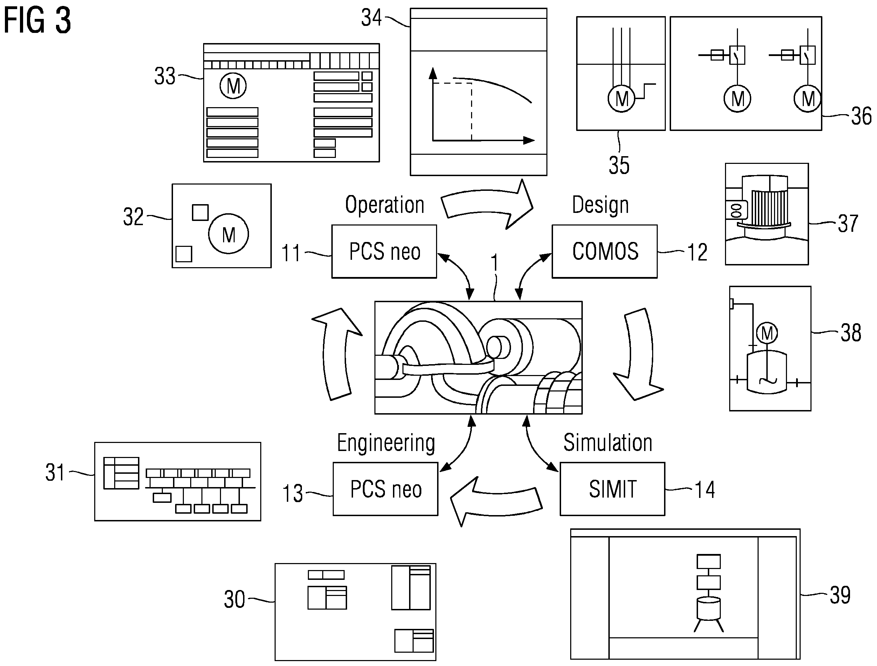

Als konkretes Beispiel für eine solche Änderung an einem Asset wird im Folgenden eine Pumpe beschrieben, die in der industriellen Anlage verbaut ist. In allen Software-Werkzeugen ist diese Pumpe enthalten. Figur 3 zeigt eine Übersicht über einen solchen Planungs-und Lebens-Kreislauf, der die Werkzeuge 11 - 14 und jeweils die in den Software-Werkzeugen angebotenen Ansichten, 30 bis 39, welche klarstellen sollen, dass die Ansichten sich teilweise sehr unterscheiden, obwohl es sich immer um den gleichen Gegenstand, also die Pumpe handelt.
- Das Planungswerkzeug 13 kennt dabei das genaue Modell der Pumpe und seine technische Spezifikation, beispielsweise die Pumpe Förderkennlinienschar, (bei Drehzahl) - und den optimalen Arbeitspunkt.
- Das Leitsystem 11 kennt die Pumpe und kann Laufzeitwerte abrufen bzw. die Pumpe parametrieren.
- Das MES-System 12 kennt die Pumpe zwar als Equipment, interagiert damit aber nicht weiter.

Im Leitsystem wird anhand einer Simulation die Notwendigkeit erkannt, die Leistung der Pumpe zu erhöhen. Im Änderungssatz wird ein Eintrag für die Pumpe, die in allen Software-Werkzeugen über eine eindeutige ID identifiziert werden kann, und deren Attribut für die Soll-Leistung hinterlegt.

Im Leitsystem, also dem initiierenden Software-Werkzeuge sind zwischenzeitlich keine weiteren Änderungen vorgenommen worden und die Änderungen aus dem Änderungssatz sind in sich konsistent und aus Sicht des Leitsystems valide.

Das MES-System hat keine Anforderungen an die Soll-Werte der Eigenschaften der Pumpe und akzeptiert den Änderungssatz. Das Engineering-System hingegen prüft die gewünschte Leistung gegen die Spezifikation der Pumpe und stellt fest, dass so eine hohe Leistung nicht unterstützt wird. Es lehnt den Änderungssatz mit der maximal möglichen Leistung zurück an das Leitsystem.

Die vom Engineering-System gemeldete Ablehnung mit dem Korrekturvorschlag wird übernommen. Somit soll weiterhin die Pumpenleistung erhöht werden, jedoch nur innerhalb der Grenzen der Spezifikation. Dies führt zu einem modifizierten Änderungssatz der erneut zur Disposition gestellt wird und nun von allen Systemen akzeptiert wird.

Das Leitsystem meldet nun final, dass die Änderung aktiv ist. Seitens MES sind keine Änderungen notwendig, das Engineering-System hingegen übernimmt die neue Soll-Leistung.

Unsere Lösung kann auch auf andere Systeme übertragen werden.

In einer weiteren Ausführungsform der Erfindung ist als weiteres Software-Werkzeug ein Simulationstool Teil des Kreislaufs. Hier können alle Änderungen vorab auch geprüft werden, wenn das Simulationssystem den tatsächlichen Zustand der Anlage widerspiegelt.

Allein in dem genannten Beispiel der eingebauten Pumpe können sich viele Fehlerquellen verstecken, mit Änderungen, die in dem einen Software-Werkzeug problemlos einplanbar sind, so kann die für den Einbau relevante Flanschgröße unpassend sein. Wenn beispielsweise der Flansch zu klein ist könnte ein nachgeschalteter Filter zusetzen, oder ein Filter wird benötigt, ist dann aber vielleicht nicht anschließbar.

Mit einem weiteren Planungstool, PCS Neo 3d, wird beispielsweise der Stromlauf geplant, jedoch kann es sich dann in einem anderen Software-Werkzeug (Comos) herausstellen, dass der notwendigere große Motor keinen Platz hat in dem vorhandenen Gehäuse.

In der Prozeßautomatisierung kommt häufiger ein Dauerbetrieb von Bauteilen vor, beispielsweise von Dosierpumpen. Nur der verwendete Automatisierungprozeß weiß, wie lange der jeweilige Produktions-Prozeß läuft, ob die ausgewählte Pumpe aber für die Laufzeit geeignet ist, wird dort nicht geklärt. Es gibt viele weitere Randbedingungen wie beispielsweise die Temperatur, (z. B. 200 Grad Medium), so muss geklärt sein, dass das ausgewählte Bauteil alle diese Anforderungen auch erfüllt. Im Stand der Technik wird das gelöst durch die Fachleute, die in der Planung die entsprechenden Randbedingungen kennen und in den Planungsprozeß mit einbeziehen, ohne dass sie hierfür eine passende Unterstützung durch das Software-Tool erhalten. Am Ende läuft es auf Trial-and-Error hinaus.

Es ist klar, dass mit der verbesserten Vorgehensweise und der leichteren Anpassbarkeit der Spezifikationen auch positive Auswirkungen auf die Lebensdauer der eingesetzten Assets in der industriellen Anlage zu erkennen sind. (bei Überlast oder Cavitation Vakuum-Blasenbildung mit Implosion)

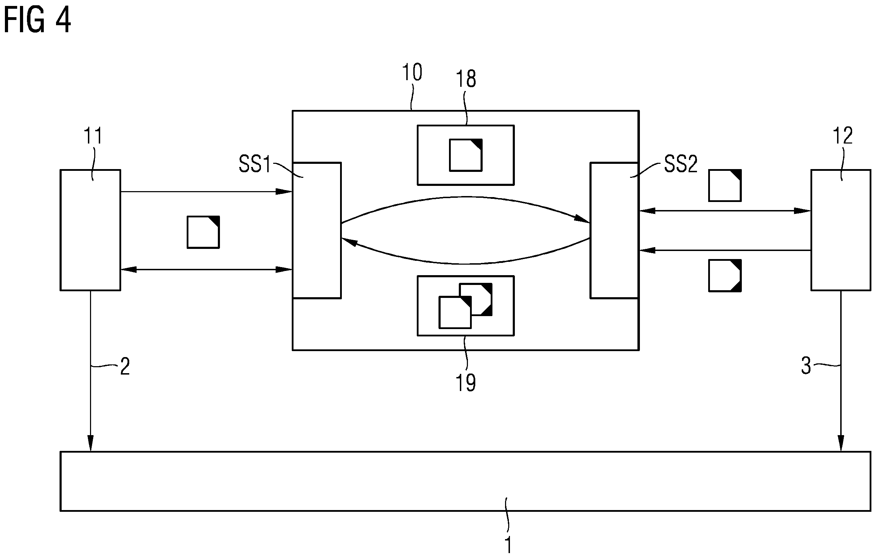

Figur 4 zeigt eine Ansicht über das Software-Werkzeug dass als Transaktionsmanager 10 zur Durchführung eines Änderungsmanagements in Planung und Betrieb eines Automatisierungssystems einer Industriellen Anlage 1 umfassend Assets fungiert.
mit einem einheitlichen Datenaustauschformat welches eine eindeutige Identifikation von Assets in allen Software-Werkzeugen 11, 12, 13 ermöglicht,
Das Software-Werkzeug ist geeignet und eingerichtet zur Durchführung einer Änderung an den Daten der industriellen Anlage in dem ersten Software-Werkzeug 11, und lokale Prüfung der Änderung in dem Software-Werkzeug auf Konsistenz 20
- mit Mitteln zum Empfang SS1) eines Änderungs-Datensatzes in dem Datenaustauschformat 22 von dem ersten Software-Werkzeug 11,
- mit Mitteln zum Übermitteln 18 des Änderungs-Datensatzes an das zweiten Software-Werkzeug 12, 13,
- mit Mitteln zum Empfang SS2 der Ergebnisse von der Überprüfung des angefragten Änderungs-Datensatzes bei dem zweiten Software-Werkzeug auf Konsistenz 24 und
- mit Mitteln zur Auswertung der empfangenen Ergebnisse 19 zur Meldung an das erste Software-Werkzeug 11, ob die Änderung in dem zweiten Software-Werkzeug möglich ist 25, wenn alle angefragten Software-Werkzeuge 12, 13 eine positive Rückmeldung abgegeben haben zur Übernahme der Änderungen 27 in allen Software-Werkzeugen 11, 12, 13 so dass eine Ausführung der geänderten Software-Werkzeuge 12, 13 in dem Automatisierungssystems 2, 3, 4 der Industriellen Anlage 1 ermöglicht wird.

### Bezugszeichenliste

- 1: Industrielle Anlage mit Assets
- 10: einheitliches Datenaustauschformat, Transaktionsmanager
- 11: Software-Werkzeug System A, Initiator der Änderung
- 12, 13: weitere Software-Werkzeuge, von der Änderung betroffen
- 14: Simulationswerkzeug
- 20: Lokale Konsistenzprüfung System A
- 21: Lokale Änderung
- 22: Änderungssatz
- 23: Empfang
- 24: Lokale Konsistenzprüfung System B, C
- 25: Ergebnis lokale Konsistenzprüfung
- 26: Auswertung
- 27: Übernahme
- 32 - 34: Darstellungen Betrieb einer Anlage
- 35 - 38: Darstellungen Design einer Anlage
- 39: Darstellung Simulation einer Anlage
- 30, 31: Darstellung Engineering einer Anlage

## Patentansprüche

1. Computerimplementiertes Verfahren für ein Änderungsmanagement in Planung und Betrieb eines Automatisierungssystems einer Industriellen Anlage (1), umfassend Assets, mit zumindest einem ersten Software-Werkzeug (11) zur Durchführung einer Planung der Anlage oder Teile davon oder der Steuerung des Betriebs in der Industriellen Anlage (1),
und einem zweiten, vom ersten verschiedenen Software-Werkzeug (12, 13) zur Durchführung einer Planung der Industriellen Anlage (1) oder Teile davon oder zur Durchführung der Steuerung (2, 3, 4) der Industriellen Anlage (1) während des Betriebs,
wobei jedes Software-Werkzeug (11, 12, 13) ein werkzeug-eigenes Daten-Modell für die in dem Software-Werkzeug (11, 12, 13) generierten und verwendeten Informationen aufweist, und wobei jedes Software-Werkzeug (11, 12, 13) eine werkzeug-eigene Schnittstelle aufweist, und ein einheitliches Datenaustauschformat (10), welches eine eindeutige Identifikation des Assets in allen Software-Werkzeugen (11, 12, 13) ermöglicht,
mit den folgenden Schritten:
a. Durchführung einer Änderung an den Daten der industriellen Anlage in dem ersten Software-Werkzeug (11), und lokale Prüfung der Änderung in dem Software-Werkzeug (11) auf Konsistenz (20)
b. Erzeugen eines Änderungs-Datensatzes in dem Datenaustauschformat (22), und Übermitteln (23) an das zweiten Software-Werkzeug (12, 13)
c. Überprüfung des angefragten Änderungs-Datensatzes bei dem zweiten Software-Werkzeug auf Konsistenz (24)
d. Rückmeldung an das erste Software-Werkzeug (11), ob die Änderung in dem zweiten Software-Werkzeug möglich ist (25),
e. Nur wenn alle angefragten Software-Werkzeuge (12, 13) eine positive Rückmeldung abgegeben haben:
f. Übernahme der Änderungen (27) in allen Software-Werkzeugen (11, 12, 13)
g. Ausführung der geänderten Software-Werkzeuge (12, 13) in dem Automatisierungssystems der Industriellen Anlage (1, 2, 3, 4).

2. Computerimplementiertes Verfahren gemäß Patentanspruch 1, **dadurch gekennzeichnet, dass**
das Werkzeug-eigenes Daten-Modell zumindest eine der folgenden Informationen umfasst:
- Beschreibung eines Assets in der industriellen Anlage,
- Angaben über Eigenschaften des Assets,
- Angaben über Schnittstellen des Assets,
- Angabe von gültigen Messwertbereichen
- Angaben zu Beziehungen zwischen Assets.

3. Computerimplementiertes Verfahren gemäß Patentanspruch 1 oder 2, **dadurch gekennzeichnet, dass**
In Schritt a) zunächst mehrere Änderungen in dem Software-Werkzeug gesammelt werden, bevor der Änderungs-Datensatz in dem Datenaustauschformat (22) erzeugt wird, wobei jede Teiländerung mit derselben Semantik erfasst wird wie das Werkzeug-eigenes Daten-Modell welches den aktuellen Zustand darstellt.

4. Computerimplementiertes Verfahren gemäß Patentanspruch 1 bis 3, **dadurch gekennzeichnet, dass**
in Schritt c) Rückfragen von dem zweiten Software-Werkzeug an das erste, die Änderung initiierende, Software-Werkzeug gestattet sind.

5. Computerimplementiertes Verfahren gemäß einem der vorherigen Patentansprüche, **dadurch gekennzeichnet, dass**
in Schritt d) eine Rückmeldung erfolgt, dass die Änderungen nicht möglich sind, und in der Rückmeldung Angaben vorhanden sich, welche anzeigen, welche Teile des Änderungswunsches zur Ablehnung geführt haben.

6. Computerimplementiertes Verfahren gemäß Patentanspruch 5, **dadurch gekennzeichnet, dass**
in der Rückmeldung Korrekturvorschläge enthalten sind, in Form eines Änderungsdatensatzes, der Teile des Änderungswunschs, welcher zur Ablehnung geführt hat.

7. Computerimplementiertes Verfahren gemäß einem der vorherigen Patentansprüche, **dadurch gekennzeichnet, dass**
ein drittes Software-Werkzeug ein Simulationssystem (14) umfasst, welches unter Verwendung der aus den Softwarewerkzeugen bekannten Datensätzen anhand des Änderungs-Datensatzes vorab prüft, ob der Änderungswunsch in den Software-Werkzeugen umsetzbar ist.

8. Computerprogrammprodukt zur Durchführung der Schritte eines Verfahrens gemäß den Merkmalen eines der Patentansprüche 1 bis 7.

9. Vorrichtung (10) zur Durchführung eines Änderungsmanagements in Planung und Betrieb eines Automatisierungssystems einer Industriellen Anlage (1), umfassend Assets,
mit einem einheitlichen Datenaustauschformat welches eine eindeutige Identifikation von Assets in allen Software-Werkzeugen (11, 12, 13) ermöglicht,
zumindest ein erstes Software-Werkzeug (11) zur Durchführung einer Planung der Anlage oder Teile davon oder der Steuerung des Betriebs in der Industriellen Anlage (1),
und einem zweiten, vom ersten verschiedenen Software-Werkzeug zur Durchführung einer Planung (1, 2, 3) der Industriellen Anlage (1) oder Teile davon oder zur Durchführung der Steuerung (1, 2, 3) der Industriellen Anlage (1) während des Betriebs,
wobei jedes Software-Werkzeug (11, 12, 13) ein werkzeug-eigenes Daten-Modell für die in dem Software-Werkzeug (11, 12, 13) generierten und verwendeten Informationen und eine werkzeug-eigene Schnittstelle aufweist,
geeignet und eingerichtet zur Durchführung einer Änderung an den Daten der industriellen Anlage in dem ersten Software-Werkzeug (11), und lokale Prüfung der Änderung in dem Software-Werkzeug (11) auf Konsistenz (20)
- mit Mitteln zum Empfang (SS1) eines Änderungs-Datensatzes in dem Datenaustauschformat (22) von dem ersten Software-Werkzeug (11),
- mit Mitteln zum Übermitteln (18) des Änderungs-Datensatzes an das zweiten Software-Werkzeug (12, 13),
- mit Mitteln zum Empfang (SS2) der Ergebnisse von der Überprüfung des angefragten Änderungs-Datensatzes bei dem zweiten Software-Werkzeug auf Konsistenz (24) und
- mit Mitteln zur Auswertung der empfangenen Ergebnisse (19) zur Meldung an das erste Software-Werkzeug (11), ob die Änderung in dem zweiten Software-Werkzeug möglich ist (25), wenn alle angefragten Software-Werkzeuge (12, 13) eine positive Rückmeldung abgegeben haben zur Übernahme der Änderungen (27) in allen Software-Werkzeugen (11, 12, 13) so daß eine Ausführung der geänderten Software-Werkzeuge (12, 13) in dem Automatisierungssystems (2, 3, 4) der Industriellen Anlage (1) ermöglicht wird.

10. Vorrichtung gemäß Patentanspruch 9, **dadurch gekennzeichnet, dass** das Werkzeug-eigenes Daten-Modell folgende Informationen umfassen kann
- Beschreibungen von Assets in der industriellen Anlage,
- Angaben über Eigenschaften des Assets
- Angaben über Schnittstellen des Assets
- Angabe von gültigen Messwertbereichen
- die Beziehung zwischen Assets.

11. Vorrichtung gemäß Patentanspruch 9 oder 10, **gekennzeichnet durch** Speichermittel (18), zur Speicherung von mehreren Änderungen, bevor der Änderungs-Datensatz in dem Datenaustauschformat (22) erzeugt wird, wobei
jede Teiländerung mit derselben Semantik gespeichert wird, wie das Produktivmodell.

12. Vorrichtung gemäß Patentanspruch 9 bis 11, **dadurch gekennzeichnet, dass** die Vorrichtung geeignet und eingerichtet ist, über die Mittel zum Empfang (SS1, SS2) Rückfragen von dem zweiten Software-Werkzeug (12, 13) zu erhalten und an das erste, die Änderung initiierende Software-Werkzeug (11) weiterzusenden.

13. Vorrichtung gemäß einem der vorherigen Patentansprüche 9 bis 12, **dadurch gekennzeichnet, dass**
- die Vorrichtung geeignet und eingerichtet ist, eine Rückmeldung an das erste Software-Werkzeug (11) zu senden, dass die Änderungen nicht möglich sind, wobei in der Rückmeldung Angaben vorhanden sich, welche anzeigen, welche Teile des Änderungswunsches zur Ablehnung geführt haben.

14. Vorrichtung gemäß Patentanspruch 13, **dadurch gekennzeichnet, dass** in der Rückmeldung Korrekturvorschläge enthalten sind in Form eines Änderungsdatensatzes, die zu einer positiven Rückmeldung führen würde.

15. Vorrichtung gemäß einem der vorherigen Patentansprüche, **dadurch gekennzeichnet, dass** ein drittes Software-Werkzeug ein Simulationssystem (14) umfasst, welches unter Verwendung der aus den Softwarewerkzeugen bekannten Datensätzen anhand des Änderungs-Datensatzes vorab prüft, ob der Änderungswunsch in den Software-Werkzeugen umsetzbar ist.
